Europäisches Patentamt

European Patent Office

Office européen des brevets

(19)

(11) Publication number: **0 045 788**
**B1**

# EUROPEAN PATENT SPECIFICATION

(45) Date of publication of patent specification: **08.06.88**

(51) Int. Cl.⁴: **G 01 D 15/16**

(21) Application number: **81900615.6**

(22) Date of filing: **11.02.81**

(86) International application number:
**PCT/US81/00193**

(87) International publication number:
**WO 81/02465 03.09.81 Gazette 81/21**

(54) **INK JET PRINTER.**

(30) Priority: **19.02.80 US 122106**

(43) Date of publication of application:
**17.02.82 Bulletin 82/07**

(45) Publication of the grant of the patent:
**08.06.88 Bulletin 88/23**

(84) Designated Contracting States:
**DE FR GB**

(56) References cited:
**US-A-3 375 528**
**US-A-3 823 409**
**US-A-3 864 685**

(73) Proprietor: **NCR Corporation**
**World Headquarters**
**Dayton, Ohio 45479 (US)**

(72) Inventor: **THOMAS, Jacob Earl**
**101 Park Lane**
**Ithaca, NY 14850 (US)**
Inventor: **ITALIANO, Victor John**
**155 Taughannock Blvd**
**Ithaca, NY 14850 (US)**

(74) Representative: **Robinson, Robert George**
**International Patent Department NCR Limited**
**206 Marylebone Road**
**London NW1 6LY (GB)**

Courier Press, Leamington Spa, England.

## Description

### Technical Field

The invention relates to an ink jet printer and, in particular, to an ink jet printer of the kind having a rotatable ink reservoir for supplying ink to a print head movable in rotary direction and adapted to eject ink droplets on to a record medium as the head is swept past the record medium.

### Background Art

Problems have been experienced with ink jet printers of the kind specified due to the rotation of the reservoir. For example, U.S. Patent No. 3,823,409 discusses the problem of ink leakage from a print head of a rotary ink jet printer resulting from the centrifugal force of the ink contained in the reservoir. This patent describes a rotary ink jet printer in which the ink reservoir has the form of a vertical paraboloid of revolution. The reservoir has a parabolic passageway adjacent to its wall through which ink flows to the jet. The passageway prevents the centrifugal force from acting on the ink adjacent the jet and thereby causing unwanted leakage therethrough. A disadvantage of this arrangement is that the relation of the slope of the passageway to the slope of the rotated ink, and thereby the speed of rotation, is critical.

### Disclosure of the Invention

It is an object of the present invention to provide an ink jet printer of the kind specified in which problems arising from rotation of the reservoir are overcome in a simple and reliable manner.

Thus, according to the invention, there is provided an ink jet printer having a rotatable ink reservoir for supplying ink to a print head through an ink supply line, said print head being movable in rotary direction and adapted to eject ink droplets on to a record medium as the head is moved past the record medium, characterized in that said ink reservoir includes a first cavity, and a second cavity to which said ink supply line is connected, and further characterized by valve means positioned to control the flow of ink between the cavities, wherein ink is free to flow between said cavities when said ink reservoir is at rest and wherein, responsive to centrifugal force, ink is prevented from flowing between said cavities during rotation of said ink reservoir.

### Brief Description of the Drawings

One embodiment of the invention will now be described, by way of example, with reference to the accompanying drawings, in which:

Fig. 1 is a side elevational view, partially in section and taken along the plane 1-1 of Fig. 2, of an ink jet printer according to the invention; and

Fig. 2 is a top plan view, partially cut away, of the ink jet printer shown in Fig. 1.

### Best Mode of Carrying Out the Invention

Before describing the preferred embodiment, it should be pointed out that in normal operation of an ink jet printer in which ink is supplied by capillary action from the ink reservoir to a print head located above the reservoir, a negative head should be maintained at the print head nozzle in order to achieve proper printing operation. In other words, the level of ink in the reservoir should be below the level of the print head within certain desired limits. The reason for maintaining such negative head is so that the ink in the nozzle has a concave meniscus recessed behind the front face of the nozzle, whereby the printer is less sensitive to vibration and a smaller mass of ink is moved during droplet ejection enabling higher droplet speed and faster nozzle refill. In the case of a rotary ink jet printer having a single cavity reservoir, as the reservoir is rotated, the surface of the ink in the reservoir takes the form of a paraboloid which form causes the ink to rise up the wall of the reservoir. Accordingly, since it is necessary for the outlet orifice of the reservoir to which the ink supply line is connected to be located at the bottom of the reservoir adjacent its wall in order to use all the ink which is moved radially by centrifugal force, the negative head at the nozzle will be reduced and this will affect the proper operation of the print head. Since it is necessary to maintain a sufficient negative head at the print head nozzle, the total volume of usable ink in a rotating single cavity reservoir may be considerably less than the amount of ink in a stationary reservoir of equal diameter. Depending on the angular velocity and the diameter of the rotating reservoir, in a typical embodiment, the permitted volume of ink may be as little as 1/14 (about 7%) of the volume of the reservoir. In this connection, assuming that the quantity of ink in a rotating reservoir is sufficiently small that the ink does not reach the top of the reservoir during rotation, it should be understood that the greater the angular velocity of the reservoir and the greater the diameter of the reservoir the greater the distance the ink will rise up the wall of the reservoir (provided that the bottom of the reservoir remains completely covered by ink).

By reason of isolating a substantial portion of the supply from the ink feed system during printing, the two-cavity arrangement of the present invention greatly increases the useful ink supply in a rotatable reservoir as compared with a rotatable reservoir having only a single cavity therein.

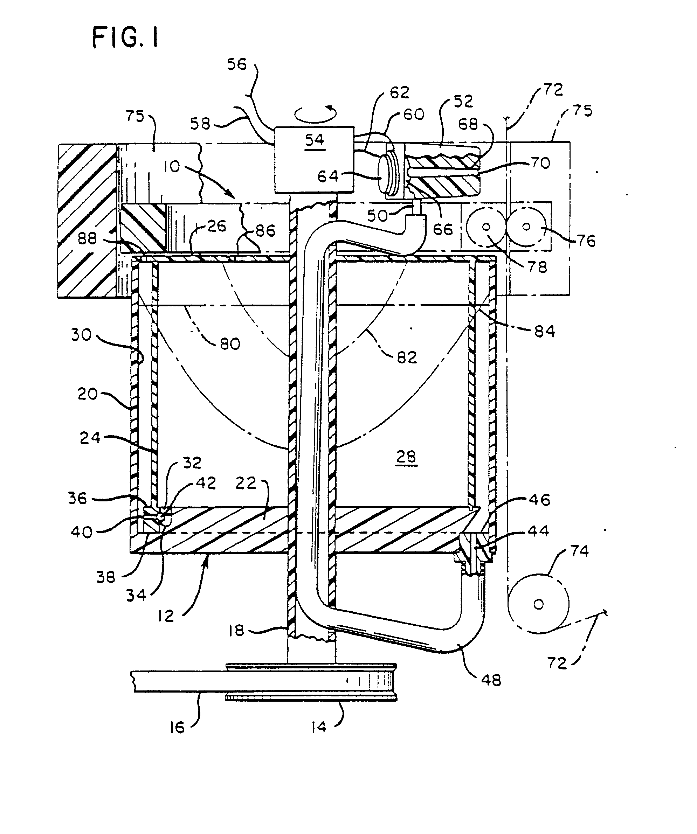

Referring now to Fig. 1, a rotary ink jet printer, indicated generally as 10, includes a cylindrical reservoir 12 supported in a suitable upright manner and driven in rotatable motion by drive means which may include a pulley 14 carrying a drive belt 16 driven by a motor (not shown). The pulley 14 is secured to a tube or hollow shaft 18 for rotation thereof along with rotation of the reservoir 12. The reservoir 12 comprises an outer wall 20 which may be an integral part of a cylinder base member 22, an inner wall 24 spaced from the outer wall, and a cover 26 which encloses the overall cylinder.

The inner wall 24 and the shaft 18 provide a large volume central cavity 28 therebetween and the outer wall 20 and the inner wall 24 provide a small volume annular cavity 30 therebetween. The base member 22 is formed to have a shape which supports the inner wall 24 at the periphery of the base member except for a portion 32 removed therefrom for the formation of a recess or depression 34 (Fig. 1). The wall 24 has a block or body portion 36 positioned on a ledge 38 of the base member 22 and an orifice or passageway 40 is provided through the body portion 36 to permit ink fluid to flow from one cavity to the other cavity. The orifice 40 has a conical shaped seat on the inner end thereof for receiving a valve member in the form of a ball 42 which is caused to be moved from one position at rest in the recess or depression 34 to the orifice 40 close-off position on the conical seat as shown.

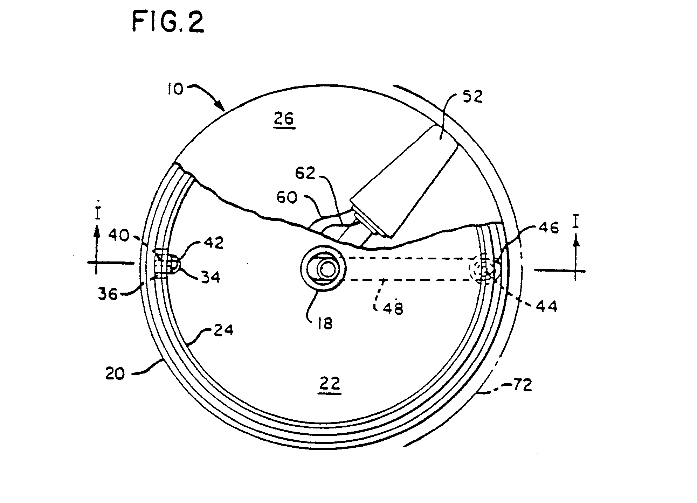

Fig. 2 shows the top plan view and locates the block portion 36 with the orifice 40 therethrough and the recess 34 in the base member 22. The base member 22 also includes an outlet orifice 44 in a block portion 46 positioned between the base member 22 and the lower end of the outer wall 20 (see also Fig. 1), the orifice 44 being located adjacent the wall 22. A supply tube or conduit 48 is fitted to the block portion 46 and extends therefrom through an opening in the wall of the tubular shaft 18 near the lower end thereof, upwardly inside the shaft 18 and through an opening in the wall of the shaft near the upper end thereof, and then is fitted to a passageway 50 connected as an input to an ink jet print head 52 carried by the conduit 48.

A print head electrical signal commutator 54 is secured to the top of the shaft 18 and has connected thereto a pair of supply leads 56 and 58 along with a pair of leads 60 and 62 extending therefrom and connecting with a piezoelectric drive element 64 of the print head 52. The print head 52 includes a chamber 66 for receiving ink fluid from the conduit 48, and a passageway 68 is provided through the print head 52 from the chamber 66 to a nozzle 70 through which ink droplets are caused to be ejected by action of the drive element 64 during the printing operation.

Paper or other record media 72 is caused to be driven around a curved guide roller 74 positioned at one side and below the reservoir 12 (Fig. 1) and supported in suitable manner to receive and guide the paper to a plane conforming with the curvature of the cylindrical reservoir 12 (Fig. 2). A suitable flume or like guide member 75 may be used to curve the paper 72 to the plane adjacent the print head 52 while a pair of rollers 76 and 78 positioned near the center of the paper may be used to drive the paper 72 past the printing station. The guide member 75 is shown as an annular member at the left side of Fig. 1 and shown in phantom at the right side with cut out portions for the rollers 76 and 78.

Prior to operation of the printer, the inner cavity 28 and the outer cavity 30 are filled with ink to a height designated as 80.

As will be made clear hereafter, the valve ball 42 serves to isolate a major proportion of the total ink in the reservoir 12 from the supply tube 48 during rotation of the reservoir. It should be understood that the greater the proportion of the ink thus isolated the greater will be the height to which the reservoir 12 can be initially filled with ink. Thus, this height can be increased by increasing the inner diameter of the outer cavity 30, and so it is desirable to make this diameter as large as is practicable.

As the reservoir 12 starts to rotate and continues to rotate, centrifugal force causes the valve ball 42 to move from the bottom of the recess 34 radially outward and upward to seat on the inner conical end of the orifice 40, thereby preventing the flow of ink between the cavities 28 and 30. When the reservoir 12 and the print head 52 are rotatably operating in a printing mode, the outer cavity 30 alone is supplying ink to the print head. In other words, ink from the outer cavity 30 is drawn from the bottom thereof and up to the print head 52 through the conduit or tube 48 by reason of the action of capillary forces. Also, during reservoir 12 rotation at printing speed, the surface of the ink in the inner cavity 28, designated as 82, and the surface of the ink in the outer cavity 30, designated as 84, take the shape of parabolas by reason of the centrifugal forces acting on the fluid. It should also be stated that the valve member 42 prevents the ink from climbing up the wall of the outer cavity 30 in a manner not conducive to proper operation of the print head.

When the printing operation ceases, the reservoir 12 stops rotating and the ball 42 moves by reason of gravity from its seated position at the inner end of the orifice 40 to its rest position at the bottom of the recess 34, thereby permitting ink from the inner cavity 28 to pass through the orifice and replenish the outer cavity 30. Additionally, both cavities 28 and 30 are vented to the atmosphere by means of vents 86 and 88.

While the reservoir in its preferred form comprises concentric cylindrical chambers, other chamber arrangements as to shape and relative positioning may likewise be utilized for defining the ink reservoir. The valve means includes a member which is freely movable from a recessed position to a seated position by reason of gravity forces and centrifugal forces, respectively, to open and close an orifice between the one cavity and the other cavity of the reservoir. While the movable member of the embodiment just described is a ball, variations thereof may include such things as a conical-shaped moving member which could be utilized and operated with a spring or like bias member to provide a restoring force acting radially inward to open the valve and thereby the orifice in the reservoir rest or nonrotational position. Such a conical-shaped member could improve the sealing effect by providing a larger surface area in contact with the seat of the orifice. In addition, while the preferred form of the invention makes use of a conduit 48 which is sufficiently rigid to both locate and maintain the print head 52 at its proper position relative to the paper 72, such head 52 may of course be appropriately positioned and maintained by independent means with the conduit 48 being flexible or rigid, as desired. Also, while a single print head and a single paper are shown, it is of course within the concept of the present invention that the valve and reservoir arrangement may be structured to accommodate additional print heads and additional printing stations may also be provided at the periphery of the rotary printer.

**Claims**

1. An ink jet printer (10) having a rotatable ink reservoir (12) for supplying ink to a print head (52) through an ink supply line (48), said print head (52) being movable in rotary direction and adapted to eject ink droplets on to a record medium (72) as the head is moved past the record medium, characterized in that said ink reservoir (12) includes a first cavity (28), and a second cavity (30) to which said ink supply line (48) is connected, and further characterized by valve means (36, 40, 42) positioned to control the flow of ink between the cavities (28, 30) wherein ink is free to flow between said cavities (28, 30) when said ink reservoir (12) is at rest and wherein, responsive to centrifugal force, ink is prevented from flowing between said cavities (28, 30) during rotation of said ink reservoir (12).

2. A printer according to claim 1, characterized in that said second cavity (30) is of lesser volume than said first cavity (28), whereby a major proportion of the ink is isolated from said ink supply line (48) during the printing operation.

3. A printer according to claim 1, characterized in that said second cavity (30) is arranged to surround said first cavity (28).

4. A printer according to claim 3, characterized in that said first cavity (28) and said second cavity (30) are formed by concentrically arranged cylinders.

5. A printer according to claim 4, characterized in that said ink reservoir (12) includes means (75) for guiding said record medium (72) in a manner conforming to the curvature of the ink reservoir (12).

6. A printer according to any one of claims 1 to 5, characterized in that said valve means (36, 40, 42) includes an orifice (40) through which said first cavity (28) and said second cavity (30) intercommunicate, and an element (42) movable to open and close said orifice (40).

7. A printer according to claim 6, characterized in that said element is a ball (42) movable to close said orifice (40) responsive to centrifugal force during rotation of said ink reservoir (12), and to open said orifice (40) due to the influence of gravity when said ink reservoir stops rotating.

8. A printer according to any one of claims 1 to 5, characterized in that said print head (52) is located above said ink reservoir (12), the arrangement being such that in operation ink is drawn up to said print head (52) from said ink reservoir (12) by capillary action.

9. A printer according to claim 8, characterized in that said ink supply line (48) is in the form of a capillary tube trained through a hollow shaft (18) which provides an axis of rotation for said ink reservoir (12).

10. A printer according to claim 9, characterized in that said ink supply line (48) is rigid and is arranged to provide support for said print head (52).

**Patentansprüche**

1. Tintenstrahldrucker (10) mit einem drehbaren Tintenbehälter (12) zum Versorgen eines Druckkopfs (52) über eine Tintenversorgungsleitung (48) mit Tinte, wobei der Druckkopf (52) in Drehrichtung bewegbar und geeignet ist, Tintentropfen auf einen Aufzeichnungsträger (72) auszustoßen, während der Kopf an dem Aufzeichnungsträger vorbeiläuft, dadurch gekennzeichnet, daß der Tintenbehälter (12) einen ersten Hohlraum (28) und einen zweiten Hohlraum (30) aufweist, an den die Tintenversorgungsleitung (48) angeschlossen ist, und ferner gekennzeichnet durch Ventilvorrichtungen (36, 40, 42), die angeordnet sind, um den Tintenfluß zwischen den Hohlräumen (28, 30) zu steuern, wobei Tinte frei zwischen den Hohlräumen (28, 30) fliessen kann, wenn der Tintenbehälter (12) in Ruhestellung ist, und wobei unter Ansprechen auf Zentrifugalkraft Tinte während der Rotation des Tintenbehälters (12) daran gehindert wird, zwischen den beiden Hohlräumen (28, 30) zu fließen.

2. Drucker nach Anspruch 1, dadurch gekennzeichnet, daß der zweite Hohlraum (30) ein geringeres Volumen als der ersten Hohlraum (28) aufweist, wodurch ein größerer Anteil der Tinte von der Tintenversorgungsleitung (48) während der Druckoperation abgetrennt ist.

3. Drucker nach Anspruch 1, dadurch gekennzeichnet, daß der zweite Hohlraum (30) den ersten Hohlraum (28) umgibt.

4. Drucker nach Anspruch 3, dadurch gekennzeichnet, daß der erste Hohlraum (28) und der zweite Hohlraum (30) als konzentrisch angeordnete Zylinder ausgebildet sind.

5. Drucker nach Anspruch 4, dadurch gekennzeichnet, daß der Tintenbehälter (12) eine Vorrichtung (75) zum Führen des Aufzeichnungsträgers (72) in einer Weise aufweist, die mit der Krümmung des Tintenbehälters (12) übereinstimmt.

6. Drucker nach einem der Ansprüche 1 bis 5, dadurch gekennzeichnet, daß die Ventilvorrichtungen (36, 40, 42) eine Düse (40) aufweisen, durch die der erste Hohlraum (28) und der zweite Hohlraum (30) miteinander in Verbindung stehen, sowie ein Element (42), das bewegbar ist, um die Düse (40) zu öffnen und zu schließen.

7. Drucker nach Anspruch 6, dadurch gekennzeichnet, daß das Element eine Kugel (42) ist, die bewegbar ist, um die Düse (40) unter Ansprechen auf die Zentrifugalkraft während der Rotation des Tintenbehälters (12) zu schließen und die Düse (40) aufgrund des Einflusses der Schwerkraft zu öffnen, wenn der Tintenbehälter seine Rotation beendet.

8. Drucker nach einem der Ansprüche 1 bis 5, dadurch gekennzeichnet, daß der Druckkopf (52) oberhalb des Tintenbehälters (12) angeordnet ist, derart, daß im Betrieb Tinte von dem Druckbehälter (12) durch Kapillarwirkung zum Druckkopf (12) nach oben gezogen wird.

9. Drucker nach Anspruch 8. dadurch gekennzeichnet, daß die Tintenversorgungsleitung die Form einer Kapillarröhre besitzt, die durch eine Hohlwelle (18) geführt ist, die eine Rotationsachse für den Tintenbehälter (12) darstellt.

10. Drucker nach Anspruch 9, dadurch gekennzeichnet, daß die Tintenversorgungsleitung (48) starr und so angeordnet ist, daß sie eine Abstützung für den Druckkopf (52) bildet.

**Revendications**

1. Imprimante (10) à jet d'encre comportant un réservoir d'encre rotatif (12) destiné à alimenter en encre une tête d'impression (52) par l'intermédiaire d'un conduit (48) d'alimentation en encre, ladite tête d'impression (52) étant mobile dans une direction de rotation et étant conçue pour éjecter des gouttelettes d'encre sur un support d'enregistrement (72), tandis que la tête est déplacée devant le support d'enregistrement, caractérisée en ce que ledit réservoir d'encre (12) présente une première cavité (28), et une seconde cavité (30) à laquelle ledit conduit (48) d'alimentation en encre est relié, et en outre caractérisée par un moyen à valve (36, 40, 42) positionné pour commander l'écoulement de l'encre entre les cavités (28, 30), l'encre étant libre de s'écouler entre lesdites cavités (28; 30) lorsque ledit réservoir d'encre (12) est au repos et, en réponse à une force centrifuge, l'encre étant empêchée de s'écouler entre lesdites cavités (28, 30) pendant une rotation dudit réservoir d'encre (12).

2. Imprimante selon la revendication 1, caractérisée en ce que ladite seconde cavité (30) est d'un volume inférieur à celui de ladite première cavité (28), de manière que la plus grande partie de l'encre soit isolée dudit conduit (48) d'alimentation en encre pendant l'opération d'impression.

3. Imprimante selon la revendication 1, caractérisée en ce que ladite seconde cavité (30) est disposée afin d'entourer ladite première cavité (28).

4. Imprimante selon la revendication 3, caractérisée en ce que ladite première cavité (28) et ladite seconde cavité (30) sont formées par des cylindres disposés concentriquement.

5. Imprimante selon la revendication 4, caractérisée en ce que ledit réservoir d'encre (12) comprend un moyen (75) destiné à guider ledit support d'enregistrement (72) d'une manière épousant la courbure du réservoir d'encre (12).

6. Imprimante selon l'une quelconque des revendications 1 à 5, caractérisée en ce que ledit moyen à valve (36, 40, 42) présente un orifice (40) par lequel ladite première cavité (28) et ladite seconde cavité (30) communiquent entre elles, et un élément (42) mobile pour ouvrir et fermer ledit orifice (40).

7. Imprimante selon la revendication 6, caractérisée en ce que ledit élément est une bille (42) mobile pour fermer ledit orifice (40) en réponse à une force centrifuge exercée pendant la rotation dudit réservoir d'encre (12), et pour ouvrir ledit orifice (40) sous l'effet de la pesanteur lorsque ledit réservoir d'encre cesse de tourner.

8. Imprimante selon l'une quelconque des revendications 1 à 5, caractérisée en ce que ladite tête d'impression (52) est placée au-dessus dudit réservoir d'encre (12), la disposition étant telle qu'en cours de fonctionnement, l'encre est entraînée vers le haut vers ladite tête d'impression (52), à partir dudit réservoir d'encre (12), par action capillaire.

9. Imprimante selon la revendication 8, caractérisée en ce que ledit conduit (48) d'alimentation en encre est sous la forme d'un tube capillaire passant dans un arbre creux (18) qui constitue un axe de rotation pour ledit réservoir d'encre (12).

10. Imprimante selon la revendication 9, caractérisée en ce que ledit conduit (48) d'alimentation en encre est rigide et est agencé afin de constituer un support pour ladite tête d'impression (52).

FIG. I

FIG.2